# EUROPEAN PATENT APPLICATION

(11) **EP 2 690 747 A2**
(43) Date of publication of application: **29.01.2014**
(21) Application number: 12187719.5
(22) Date of filing: 09.10.2012
(51) Int. Cl.: H02J 7/04, H02J 9/06

(54) **Control system, power supply system, and method for preventing a floating charge of battery**

(30) Priority: 24.07.2012 TW 101126664
(71) Applicant: Lite-On Clean Energy Technology Corp., 11494 Taipei City (TW)
(72) Inventor: Liang, Cheng-Kuan, 11494 Taipei City (TW); Shih, Wen-Chien, 11494 Taipei City (TW); Lai, Chiou-Chu, 11494 Taipei City (TW)
(74) Representative: Altenburg, Bernardus Stephanus Franciscus

(57) **Abstract**

A control system, a power supply system, and a method for preventing a floating charge of a battery are disclosed. The control system is applied to the power supply system electronically connected to an electronic equipment and a power supply terminal. The control system includes a current regulator module and a battery management system. The current regulator module includes a switch element and a diode connected in parallel. The battery management system is used for monitoring a capacity of the battery and controlling the switch element; wherein when the capacity of the battery reaches a default value, the battery management system is used for controlling the switch element to stop charging the battery. When the power supply terminal stops providing the power, the battery provides the power through the diode first and then through the switch element to the electronic equipment.

## Description

### BACKGROUND OF THE INVENTION

### 1. Field of the Invention

The present invention relates to a control system, a power supply system, and a method for preventing a floating charge of a battery, and more particularly, to a control system, a power supply system, and a method for preventing a floating charge of a battery by which an electronic equipment can obtain maximum power when the battery provides the power to the electronic equipment.

### 2. Description of the Related Art

Since lithium-ion batteries have the advantages of high energy density, large output power, no memory effect, and small size, such batteries currently are widely used in a variety of portable electronic products. Attracted by the powerful advantages of lithium-ion batteries, the uninterruptible power supply (UPS), which mostly used lead-acid batteries in the past, has also been gradually to use lithium-ion batteries as its standby power.

Although lithium-ion batteries have the advantages described above, their life will be cut short when they are overcharged, which impacts the efficiency of battery use. Therefore, how to avoid an excessive floating charge of the lithium-ion battery is actually a very important topic.

The China Patent Application No. CN201750138 has disclosed a control circuit for preventing a floating charge of a battery. The control circuit can control the conduction of a charging path when a lithium battery is discharged to the protection settings such that an external power can charge the lithium battery. After the battery is fully charged, through the control of the control circuit, the original charging path is disconnected to prevent the external power from continuously charging the battery such that the objective of preventing a floating charge of a battery can be achieved.

Although the control circuit described above can achieve the objective of preventing a floating charge of a battery, once the external power stops providing the power, the battery will start to provide power to the load through the conducting of the diode switch. Since the diode is a passive component, placing the diode in the discharge path will make it impossible to maximize the power supply of the battery, leading to inefficiencies in the system power supply.

### SUMMARY OF THE INVENTION

It is a major objective of the present invention to provide a control system for preventing a floating charge of a battery.

It is another objective of the present invention to provide a method for preventing a floating charge of a battery.

It is another objective of the present invention to provide a power supply system for preventing a floating charge of a battery.

In order to achieve the objectives above, a control system for preventing a floating charge of a battery of the present invention can be applied to a power supply system that is electrically connected to an electronic equipment and a power supply terminal. The power supply terminal is used for providing power to the electronic equipment. When the power supply terminal stops providing the power, the power supply system can provide the power from a battery disposed in the electronic equipment. The control system includes a current regulator module and a battery management system, wherein the current regulator module is electrically connected to the battery, the power supply terminal, and the electronic equipment. The current regulator module includes a switch element and a diode connected with the switch element in parallel. The battery management system, which is electrically connected to the battery and the current regulator module, is used for monitoring a capacity of the battery to control the current regulator module such that the power supply terminal provides a charging current through the current regulator module for charging the battery, wherein when the capacity of the battery reaches a default value, the battery management system is used to control the disconnection of the switch element of the current regulator module such that the power supply terminal stops charging the battery. When the power supply terminal stops providing the power, the battery provides the power through the diode to the electronic equipment first, and then the battery management system controls the conduction of the switch element such that the battery provides the power through the switch element to the electronic equipment.

A method for preventing a floating charge of a battery of the present invention can be applied to the power supply system that electrically connects the electronic equipment and the power supply terminal and has a current regulator module including a switch element and a diode. The power supply terminal is used for providing power to the electronic equipment. When the power supply terminal stops providing power, the power supply system provides the power from the battery disposed in the electronic equipment. The method for preventing a floating charge of a battery includes the following steps: receiving a charging current from the power supply terminal to charge the battery; monitoring a capacity of the battery and determining whether the capacity of the battery is below a default value; if the capacity of the battery reaches the default value, controlling the switch element to be disconnected to prevent the power supply terminal from continuously charging the battery; and providing the power through the diode to the electronic equipment first, and then controlling the conduction of the switch element when the power supply terminal stops providing the power such that the battery provides the power through the switch element to the electronic equipment.

The power supply system of the present invention is electrically connected to the electronic equipment and the power supply terminal and used for providing power to the electronic equipment when the power supply terminal stops providing the power. The power supply system includes a battery and the previously mentioned control system.

### BRIEF DESCRIPTION OF THE DRAWINGS

FIG. 1 is a system architecture diagram illustrating a control system applied to a power supply system of the present invention;
FIG. 2 is a view illustrating a control system in a first embodiment of the present invention;
FIG. 3 is a flow chart illustrating the steps of the first embodiment for preventing a floating charge of a battery of the present invention;
FIG. 4 is a view illustrating a control system in a second embodiment of the present invention; and
FIG. 5 is a flow chart illustrating the steps of the second embodiment for preventing a floating charge of a battery of the present invention.

### DETAILED DESCRIPTION OF THE PREFERRED EMBODIMENT

The aforementioned and other objectives, features, and advantages of the present invention will become more apparent from the following detailed description when taken in conjunction with the accompanying drawings.

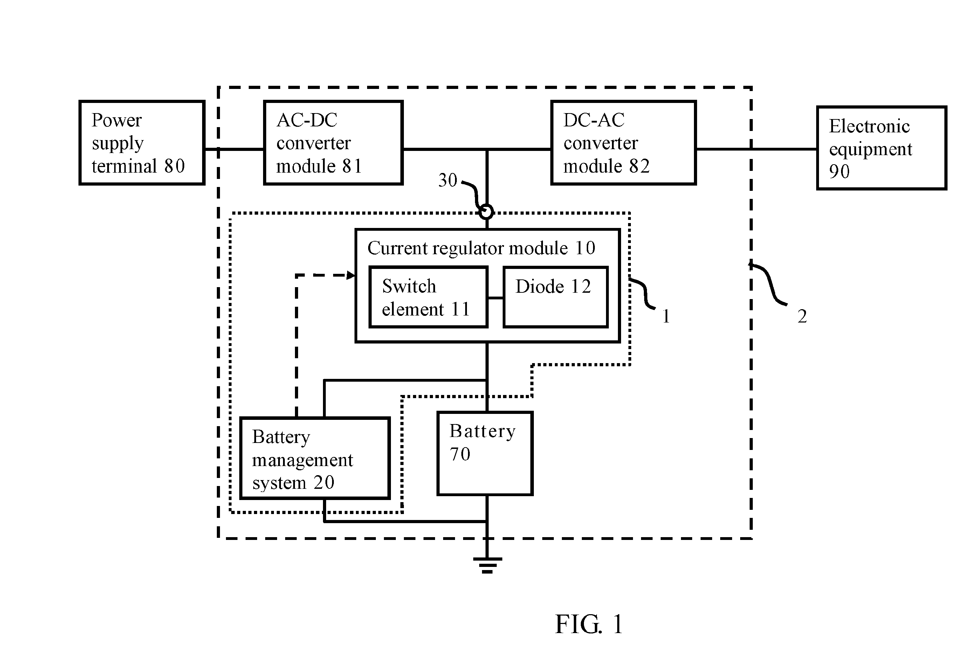

Please first refer to FIG. 1, which is a system architecture diagram illustrating a control system applied to a power supply system of the present invention.

As shown in FIG. 1, in an embodiment of the present invention, a control system 1 for preventing a floating charge of a battery of the present invention can be applied to a power supply system 2 that is electrically connected to an electronic equipment 90 and a power supply terminal 80. The power supply terminal 80 provides power through the power supply system 2 to the electronic equipment 90, or uses a battery 70 disposed in the power supply system 2 to directly provide power to the electronic equipment 90 when the power supply terminal 80 stops providing the power. In an embodiment of the present invention, the power supply system 2 is an uninterruptible power supply (UPS), but the present invention is not limited to this. In addition, it should be noted that although FIG. 1 shows only an on-line UPS, persons having ordinary skill in the art should easily know that the control system 1 of the present invention is not limited to those applied to the on-line UPS, but also can be applied to other types of UPS, such as a line-interactive UPS and an off-line UPS.

The power supply system 2 includes an AC-DC converter module 81, a DC-AC converter module 82, the control system 1, and the battery 70. The AC-DC converter module 81 can include components such as a rectifier and a charging chip used for converting alternating current (AC) generated by the power supply terminal 80 to direct current (DC). The DC-AC converter module 82 can include components such as a converter, an inverter, and a filter used to invert DC to AC. However, the electronic equipment can be AC or DC loads. Accordingly, the use of the DC-AC converter module 82 will depend on the characteristics of the electronic equipment. Since AC-to-DC and DC-to-AC conversion are ordinary skills known in the current electronics field, and the circuit structure, effect, and the principles of the available components are dispersed in many patents and open technical literature and are not the patentable technology focus of the present application, the manner of conversion will not be described herein.

As shown in FIG. 1, in an embodiment of the present invention, the control system 1 of the present invention includes a current regulator module 10 and a battery management system 20.

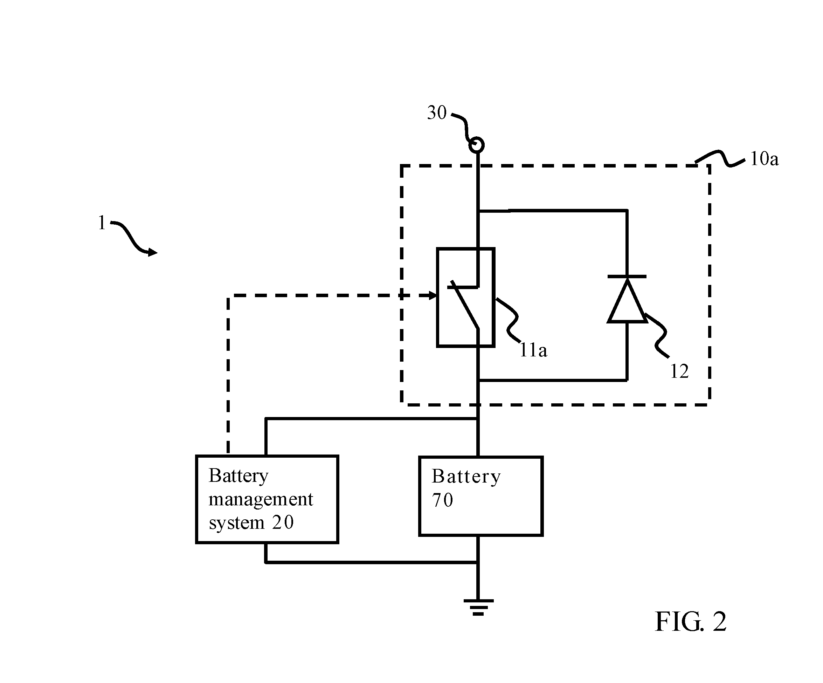

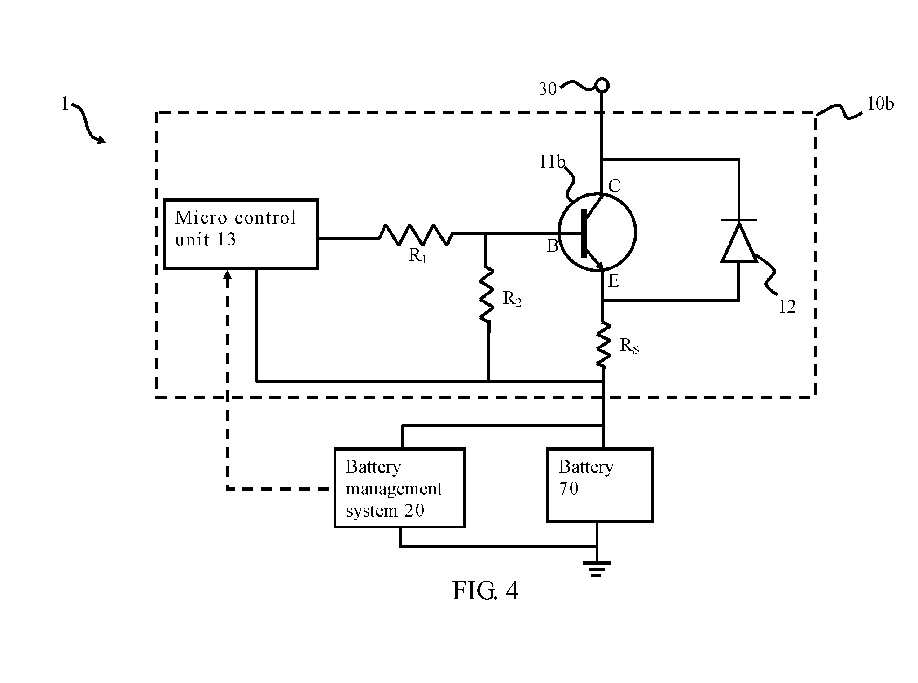

The current regulator module 10 is electrically connected to the battery 70 and is electrically connected to the power supply terminal 80 and the electronic equipment 90 via the contact 30. The current regulator module 10 includes a switch element 11 and a diode 12 connected in parallel. The circuit architecture related to the current regulator module 10 will be described in detail in the illustration with regard to FIG. 2 and FIG. 4, and thus will not be described here. The power supply terminal 80 can charge the battery 70 through the conduction of the switch element 11 of the current regulator module 10. Also, when the power supply terminal 80 stops providing the power, the battery 70 can provide the power through the diode 12 first and then through the conduction of the switch element 11 to the electronic equipment 90.

The battery management system 20 may be implemented with a hardware structure, a combination of hardware and firmware structure, or a combination of hardware and software structure, but the present invention is not limited to this. The battery management system 20, which is electrically connected to the battery 70 and the current regulator module 10, is used for monitoring the value (e.g. voltage or temperature) of the battery 70 and determining whether a charging current is continuously received from the power supply terminal 80 so as to control the degree of conducting or disconnecting of the switch element 11 of the current regulator module 10 and to adjust the current passing through the current regulator module 10.

Please continue to refer to FIG. 1 and also refer to FIG. 2, which is a view showing a control system in a first embodiment of the present invention.

As shown in FIG. 1 and FIG. 2, in the first embodiment of the present invention, the current regulator module 10a includes a switch element 11a and a diode 12 electrically connected to the power supply terminal 80 and the electronic equipment 90 via the contact 30. The switch element 11a is a normally closed control switch, but the present invention is not limited to this. A characteristic of the normally closed control switch is that when the current passing through the control switch is below the magnetizing current, the control switch is in a conductive state (i.e., the contact of the control switch is in a closed state). At this time, both ends of the switch are conductive. Conversely, when the current provided passing through the control switch has reached the magnetizing current, the control switch is disconnected due to electromagnetic effects (i.e., the contact of the control switch is opened). At this time, both ends of the switch are in a disconnected state. In said embodiment of the present invention, the current to pass through the switch element 11a can be provided by the battery 70, but the present invention is not limited to this. The current can also be supplied by the power supply terminal 80 or another power source.

The diode 12 is electrically connected to the battery 70 and the electronic equipment 90. Also, the diode 12 is connected to the switch element 11a in parallel. The anode of the diode 12 is electrically connected to the positive terminal of the battery 70; the cathode of the diode 12 is electrically connected to the contact 30. The diode 12 is used to enable the battery to provide the power through the conduction of the diode 12 to the electronic equipment 90 when the power supply terminal 80 stops providing the power and the switch element 11a is not conductive in a timely manner or unable to be conductive.

As shown in Figs 1 and 2, the battery management system 20 of the present invention can be used to control if the switch element 11a is conductive or disconnected. When the power supply terminal 80 is in a normal power supply state, the battery management system 20 controls the conduction of the switch element 11a to continuously charge the battery 70. At this time, the negative voltage of the diode 12 is greater than the positive voltage of the diode 12, and the diode 12 is in a reverse bias state; that is, the voltage of the contact 30 is greater than that of the battery 70, and thus the diode 12 is in a non-conducting state. Meanwhile, the battery management system 20 can determine whether the electricity of the battery 70 is saturated by measuring if the capacity of the battery 70 has reached a default value. The default value described here can be a unit value of voltage or coulomb, but the present invention is not limited to the units mentioned above. When the capacity of the battery 70 reareaches the default value, the battery management system 20 controls the switch element 11a to be disconnected and stops charging the battery 70.

On the other hand, when the power supply terminal 80 is unable to normally supply power, the positive voltage to provide to the diode 12 by the battery 70 is greater than the operable voltage (generally 0.7V), and thus the diode 12 is conductive. Meanwhile, the battery management system 20 controls the conduction of the switch element 11a, and then through the switch element 11a bypassing the diode 12, enables the battery 70 to provide the power through the switch element 11a to the electronic equipment 90. As a result, the battery 70 can be discharged through non-passive components such as the switch element 11a to avoid energy losses. The specific way for the foregoing battery management system 20 to control the switch element 11a will be described in detail hereinafter.

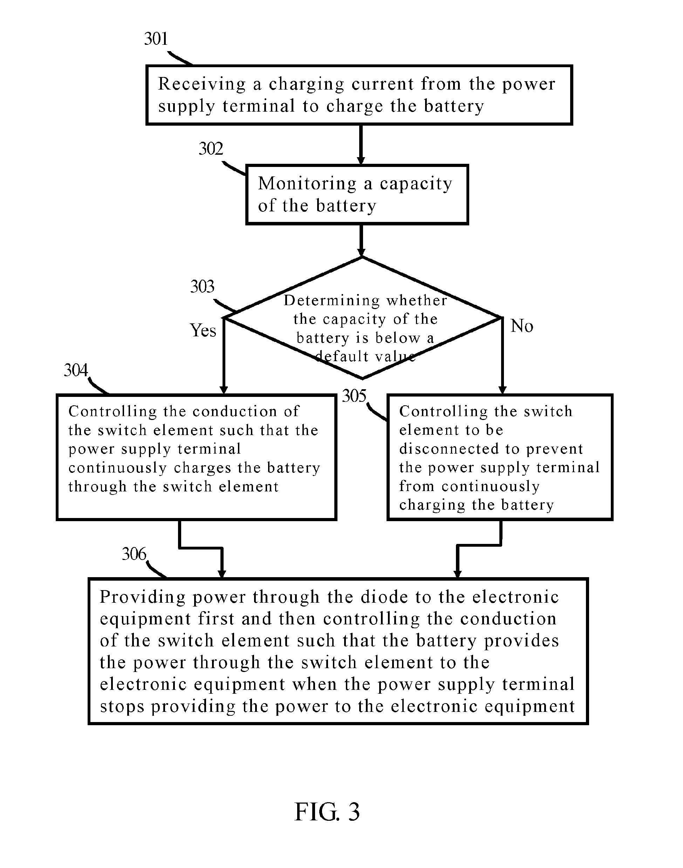

Now please refer to FIG. 3 and also refer to FIG. 1 and 2, wherein FIG. 3 is a flow chart illustrating the steps of the first embodiment for preventing a floating charge of a battery of the present invention. However, it should be noted that although the control system 1 in the first embodiment described above is used as an example to explain the method for preventing a floating charge of a battery of the present invention, the method is not limited to using the control system 1 in the first embodiment.

Firstly, the system performs step 301: receiving a charging current from the power supply terminal to charge the battery.

At first, the power supply system 2 of the present invention is electrically connected to the power supply terminal 80 to receive the charging current from the power supply terminal 80. In the first embodiment of the present invention, since the switch element 11a of the current regulator module 10a is a normally closed control switch, the switch element 11a can be conductive such that the battery 70 can receive the charging current for charging.

Then the system performs step 302: monitoring a capacity of the battery.

Next, the battery management system 20 is electrically connected to both ends of the battery 70 for monitoring a capacity of the battery 70.

Then the system performs step 303: determining whether the capacity of the battery is below a default value.

Then the battery management system 20 determines whether the capacity of the battery 70 is below a default value according to the measured capacity state to determine if the electricity of the battery 70 has reached saturation, and further to control the conduction or disconnection of the switch element 11a (i.e., controlling the contact of the normally closed control switch to be connected or opened) to avoid a floating charge of the battery 70.

Accordingly, when the capacity of the battery 70 is still below the default value, the system proceeds with step 304: controlling the conduction of the switch element such that the power supply terminal continuously charges the battery through the switch element.

In the first embodiment of the present invention, when the capacity of the battery 70 is below the default value, this means that the electricity of the battery 70 is not saturated. Therefore, when the battery management system 20 detects that the capacity of the battery 70 is below the default value, the battery management system 20 controls the conduction of the switch element 11a (i.e., controlling the connection of the contact of the switch element 11a) . As a result, the charging current generated by the power supply terminal 80 is continuously transmitted to the battery 70 through the switch element 11a to charge the battery 70. It should be noted that the battery management system 20 can further control the conduction of the switch element 11a to charge the battery 70 through the switch element 11a only when monitoring that the capacity of the battery 70 is lowered to a lowest default value such that the power supply terminal 80 has a lowest default value smaller than the default value. This can avoid charging the battery 70 too frequently and reduce the number of times the battery 70 is charged such that the charging process can be performed more efficiently.

When the capacity of the battery 70 reaches the default value, this means that the electricity of the battery 70 is already saturated, and thus the system proceeds with step 305: controlling the switch element to be disconnected to prevent the power supply terminal from continuously charging the battery.

In the first embodiment of the present invention, after the battery 70 is fully charged, the battery management system 20 controls the disconnection of the switch element 11a (i.e., controlling the contact of the switch element 11a to be opened) to prevent a floating charge of the battery 70. At this time, since both ends of the switch element 11a are in a disconnected state, continuously charging of the battery 70 through the switch element 11a by the power supply terminal 80 can be avoided, and thus the objective of preventing a floating charge of the battery 70 can be achieved.

Last, the system performs step 306: providing the power through the diode to the electronic equipment first, and then controlling the conduction of the switch element when the power supply terminal stops providing the power such that the battery provides the power through the switch element to the electronic equipment.

When the power supply terminal 80 stops providing the power to the battery 70 and the electronic equipment 90, the battery management system 20 controls the conduction of the current regulator module 10a such that the battery 70 provides the power through the current regulator module 10a to the electronic equipment 90. In the first embodiment of the present invention, the current regulator module 10a includes a switch element 11a and a diode 12 connected to each other in parallel. The anode of the diode 12 is electrically connected to the positive terminal of the battery 70; the cathode of the diode 12 is electrically connected to the contact 30. When the power supply terminal 80 provides the power, the negative voltage of the diode 12 is greater than the positive voltage such that the diode 12 is in a reverse bias state; that is, the voltage of the contact 30 is greater than the battery voltage. Therefore, the diode 12 is not conductive. Once the power supply terminal 80 stops providing the power, the voltage drop generated by the power supply terminal 80 disappears, the voltage of the battery 70 is greater than the threshold voltage of the diode 12, and thus the diode 12 is conductive. At this time, the discharge current generated by the battery 70 can be transmitted through the diode 12 to the electronic equipment 90 to supply power to the electronic equipment 90, and thus the objective of allowing the electronic equipment 90 to provide uninterruptible power can be achieved. Then once the battery management system 20 detects that the battery 70 is in a discharged state, the battery management system 20 will immediately control the conduction of the switch element 11a. At this time, the impedance of the contact of the switch element 11a is very small (much smaller than the impedance of the diode 12). Therefore, when the switch element 11a is conductive, it will bypass the diode 12 such that the discharge current generated by the battery 70 will no longer pass through the diode 12, but through the switch element 11a to the electronic equipment 90. This arrangement allows the electronic equipment 90 achieve the maximum use of power.

It should be noted here that theoretically when the power supply terminal 80 stops providing the power, the velocity of conduction of the diode 12 when conductive is faster than that of the switch element 11a. However, in macroscopic terms, the velocity of the switch element 11a can meet the power restoration speed required by the existing UPS. Accordingly, the diode 12 in the control system 1 of the present invention can be omitted. In addition, the use of the diode 12 not only increases the system restoration speed but also provides a standby charging path such that the discharge current generated by the battery 70 can still be transmitted through the diode 12 to the electronic equipment 90 when the switch element 11a is unable to be conductive.

Now please refer to FIG. 4, which is a view illustrating a control system in a second embodiment of the present invention.

In the second embodiment of the present invention, the current regulator module 10a of the present invention includes a switch element 11b, a diode 12, and a micro control unit 13, and is electrically connected to the power supply terminal 80 and the electronic equipment 90 through the contact 30. Similarly, the switch element 11b is connected to the diode 12 in parallel and is electrically connected to the micro control unit 13. The switch element 11b can be a bipolar junction transistor (BJT). In the second embodiment of the present invention, the collector C of the switch element 11b is electrically connected to the contact 30, the emitter E of the switch element 11b is electrically connected to the battery 70, and the base B is electrically connected to the micro control unit 13. The micro control unit 13 may be implemented with a hardware structure, a combination of a hardware and a firmware structure, or a combination of a hardware and a software structure, but the present invention is not limited to this. The micro control unit 13 is electrically connected to the battery management system 20 such that the battery management system 20 can control the micro control unit 13 to adjust the voltage of the base B according to a measured capacity state of the battery 70. As such, the conduction and non-conduction between the emitter E and collector C of the switch element 11b can be controlled to achieve the same purpose and efficiency of the first embodiment and increase the current control efficiency. Since the principle and relationship between the conduction of the collector C and the emitter E of the transistor and the voltage of the base B are easily known by persons having ordinary skill in the art, they will not be described in detail hereinafter. In addition, the switch element 11b can also be a metal-oxide semiconductor field-effect transistor (MOSFET), as its effect is similar to that of the BJT, and thus it will not be repeated hereinafter.

On the other hand, since the efficacy and safety of the battery 70 will be affected by temperature, the battery management system 20 further monitors the temperature of the battery 70 and controls the micro control unit 13 according to the temperature of the battery 70 to adjust the charging current provided to the battery 70. When the temperature of the battery 70 is high, the battery management system 20 controls the base B of the switch element 11b through the micro control unit 13 to adjust the current that can pass through the emitter E and the collector C of the switch element 11b and decrease the charging current provided to the battery 70, or make the battery 70 stop charging. When the temperature of the battery 70 is low, similarly, the battery management system 20 controls the base B of the switch element 11b through the micro control unit 13 to adjust the current that can be conducted through the emitter E and the collector C of the switch element 11b. As a result, the charging current provided to the battery 70 can be increased in a timely manner, and the efficiency of charging can be enhanced.

It should be noted that each of the above-mentioned embodiments illustrates only the preferred embodiments of the present invention. To avoid redundancy, all the possible combinations of changes are not described in detail. However, those having ordinary skill in the art should understand that the above-mentioned components are not all required. It is also possible to comprise other conventional components in detail to implement the present invention. Each component is likely to be omitted or modified as needed. Also, other components do not not necessarily exist between any two elements. For example, as shown in FIG. 4, passive components (i.e., resistances R₁ R₂, and Rₛ) are provided between each device to protect each device from not being burned by the current.

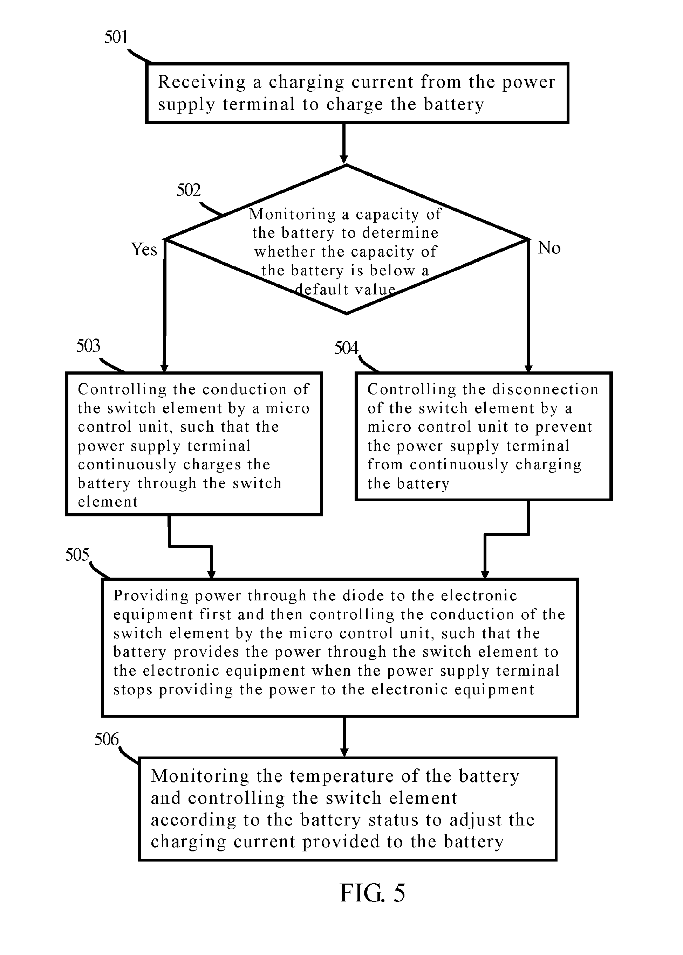

Now please refer to FIG. 5, and also refer to FIG. 1 and FIG. 4, wherein FIG. 5 is a flow chart illustrating the steps of the second embodiment for preventing a floating charge of a battery of the present invention. However, it should be noted that although the control system 1 of the second embodiment described above is used as an example for illustrating the method for preventing a floating charge of a battery disclosed in the present invention, the present method is not limited to using the control system 1 of the above-mentioned second embodiment.

Initially, the system performs step 501: receiving a charging current from the power supply terminal to charge the battery.

First, the power supply system 2 of the present invention is electrically connected to the power supply terminal 80 and receives the charging current from the power supply terminal 80, and transmits the charging current through the switch element 11b of the current regulator module 10b to the battery 70 to charge the battery 70.

Then the system performs step 502: monitoring a capacity of the battery to determine whether the capacity of the battery is below a default value.

Next, the battery management system 20 is electrically connected to both ends of the battery 70 to monitor a capacity of the battery 70 and determine whether the capacity of the battery 70 is below a default value and if the electricity of the battery 70 has reached saturation according to the measured capacity state. Step 502 is similar to step 302 and 303, and thus it will not be repeated hereinafter.

Therefore, in step 502, when the battery management system 20 determines that the capacity of the battery 70 is still below the default value, the system proceeds with step 503: controlling the conduction of the switch element through the micro control unit such that the power supply terminal continuously charges the battery through the switch element.

When the battery management system 20 determines that the capacity of the battery 70 is below a default value, the battery management system 20 controls the base B of the switch element 11b through the micro control unit 13 to make the collector C and the emitter E of the switch element 11b conductive such that the charging current is continuously transmitted to the battery 70 through the switch element 11b to charge the battery 7. Similarly, the battery management system 20 can also further control the conduction of the switch element 11b when it monitors and determines that the capacity of the battery 70 is below a lowest default value such that the power supply terminal 80 charges the battery 70 through the switch element 11b, wherein the lowest default value is lower than the default value.

In step 502, if the battery management system 20 determines the capacity of the battery 70 reaches a default value, which means that the capacity of the battery 70 is already saturated, the system proceeds with step 504: controlling the switch element to be disconnected through the micro control unit to prevent the power supply terminal from continuously charging the battery.

To prevent a floating charge of the battery 70, the battery management system 20 controls the base B of the switch element 11b by the micro control unit 13 to make the collector C and the emitter E of the switch element 11b disconnected. At this time, since both ends of the switch element 11b are in a disconnected state, the continuous charge of the battery 70 through the switch element 11b by the power supply terminal 80 can be avoided, by which the objective of preventing the battery 70 from a floating charge can be achieved.

Then the system performs step 505: providing power to the electronic equipment through the diode first when the power supply terminal stops providing the power, and then controlling the conduction of the switch element by the micro control unit such that the battery provides the power to the electronic equipment through the switch element.

Similar to the first embodiment of the present invention, the current regulator module 10b in the second embodiment of the present invention includes a switch element 11b and a diode 12 connected in parallel. Accordingly, once the power supply terminal 80 stops providing the power, the diode 12 will be conductive first. At this time, the discharge current generated by the battery 70 will pass through the diode 12 to the electronic equipment 90, and thus the battery can provide the power to the electronic equipment 90. After that, the battery management system 20 controls the base B of the switch element 11b by the micro control unit 13 to conduct the collector C and the emitter E of the switch element 11b. The battery 70 can provide the power through the switch element 11b to the electronic equipment 90, and also bypass the diode 12 such that the discharge current generated by the battery 70 no longer passes through the diode 12 but passes through the switch element 11b to the electronic equipment 90.

Finally the system performs step 506: monitoring the temperature of the battery and controlling the current regulator module according to the battery status to adjust the charging current provided to the battery.

Last, the battery management system 20 further monitors the temperature of the battery 70 and controls the micro control unit 13 according to the status of the battery 70 to adjust the charging current provided to the battery 70. Accordingly, when the temperature of the battery 70 is high, the battery management system 20 controls the micro control unit 13 to adjust the switch element 11b to decrease the charging current provided to the battery 70 or to make the battery 70 stop charging. When the temperature of the battery 70 is low, the battery management system 20 controls the micro control unit 13 to adjust the switch element 11b to increase the charging current provided to the battery 70, which enhances the efficiency of charging.

It should be noted that the method for preventing a floating charge of a battery disclosed of the present invention is not limited to the step sequence in the foregoing first embodiment or second embodiment. The step sequence can be changed as long as the objectives of the present invention can be achieved.

From the above description, the control system 1 of the present invention can make the charging path disconnected through the control of the battery management system 20 to prevent the power supply terminal 80 from continuously charging the battery 70 when the voltage of the battery 70 in the power supply system 2 achieves the floating voltage. Also, when the power supply terminal 80 stops providing the power, through the control of the battery management system 20, the switch element 11a or the switch element 11b is conductive such that the battery 70 can provide the power through the switch element 11a or the switch element 11b to the electronic equipment 90. During the power supply of the present invention, there are no dissipative elements in the power supply path, and thus there are no excess energy losses when the battery 70 is discharged. Accordingly, the supply power provided by the battery 70 to the electronic equipment 90 can be maximized, and thus the deficiencies in the prior art can be solved.

As described above, the objectives, means, and effectiveness of the present invention are different from the characteristics in the prior art. It would be appreciated if the patent application could be issued as early as possible to benefit society. It should be also noted that the embodiments described above are for illustrative purposes; the disclosed claims of the present invention should be within the range of the accompanying claims and should not be limited to the embodiments described above.

## Claims

1. A control system for preventing a floating charge of a battery, which is used in a power supply system electrically connected to an electronic equipment and a power supply terminal used for providing power to the electronic equipment; wherein the power supply system is used to provide power through a battery of the power supply system to the electronic equipment when the power supply terminal stops providing the power, the control system comprising:
a current regulator module electrically connected to the battery, the power supply terminal, and the electronic equipment, and comprising a switch element and a diode, wherein the diode is connected to the switch element in parallel; and
a battery management system electrically connected to the battery and
the current regulator module and used for monitoring a capacity of the battery to control the current regulator module such that the power supply terminal charges the battery through a charging current provided by the current regulator module; wherein when the capacity of the battery reaches a default value, the battery management system controls the disconnection of the switch element of the current regulator module such that the power supply terminal stops charging the battery; when the power supply terminal stops providing power, the battery provides the power through the diode to the electronic equipment first, then the battery management system controls the conduction of the switch element such that the battery provides the power through the switch element to the electronic equipment.

2. The control system as claimed in Claim 1, wherein the switch element can be a normally closed control switch.

3. The control system as claimed in Claim 1 or 2, wherein the battery management system further monitors a temperature of the battery, and controls the current regulator module according to the battery status to adjust the charging current provided to the battery.

4. The control system as claimed in Claims 1 to 3, wherein the current regulator module further comprises a micro control unit, which is electrically connected to the switch element and used for controlling the degree of conducting or disconnecting of the switch element; wherein when the power supply terminal stops providing the power, the battery provides the power through the diode to the electronic equipment, and then the battery management system controls the conduction of the switch element through the micro control unit such that the battery provides the power through the switch element to the electronic equipment.

5. The control system as claimed in Claim 4, wherein the switch element can be a Metal-Oxide Semiconductor Field-Effect Transistor (MOSFET) or a Bipolar Junction Transistor (BJT).

6. A method for preventing a floating charge of a battery used for a power supply system; the power supply system is electrically connected to an electronic equipment and a power supply terminal, and comprises a current regulator module, wherein the current regulator module comprises a switch element and a diode, the power supply terminal being used to provide the power to the electronic equipment, and the power supply system being used to provide the power through the current regulator module to the electronic equipment from a battery of the power supply system when the power supply terminal stops providing the power, the method for preventing a floating charge of a battery comprising the following steps:
receiving a charging current from the power supply terminal to charge the battery;
monitoring a capacity of the battery to determine whether the capacity of the battery is below a default value;
if the capacity of the battery reaches the default value, controlling the switch element to be disconnected to prevent the power supply terminal from continuously charging the battery; and
providing the power through the diode to the electronic equipment first, and then controlling the conduction of the switch element when the power supply terminal stops providing the power such that the battery provides the power through the switch element to the electronic equipment.

7. The method for preventing a floating charge of the battery as claimed in Claim 6, further comprising the following step: if the capacity of the battery is below the default value, controlling the conduction of the switch element of the current regulator module such that the power supply terminal continuously charges the battery through the switch element.

8. The method for preventing a floating charge of the battery as claimed in Claim 7, further comprising the following step: if the capacity of the battery is below the default value and below a lowest default value, controlling the conduction of the switch element such that the power supply terminal continuously charges the battery through the switch element; wherein the lowest default value is smaller than the default value.

9. The method for preventing a floating charge of the battery as claimed in Claim 6, 7 or 8, wherein the first switch element can be a normally closed control switch.

10. The method for preventing a floating charge of the battery as claimed in Claim 6 or any of the claims 7 to 9, further comprising the following steps:
monitoring a temperature of the battery; and
controlling the current regulator module to adjust the charging current provided to the battery according to the status of the battery.

11. The method for preventing a floating charge of the battery as claimed in Claims 6 to 10, wherein the current regulator module includes a micro control unit, the method further comprising the following steps:
controlling the degree of conduction and disconnection of the switch element by the micro control unit; and
when the power supply terminal stops providing the power, providing the power through the diode to the electronic equipment first, and
then controlling the conduction of the switch element such that the battery provides the power through the switch element to the electronic equipment.

12. The method for preventing the floating charge of the battery as claimed in Claim 11, wherein the switch element can be a Bipolar Junction Transistor (BJT) or a Metal-Oxide Semiconductor Field-Effect Transistor (MOSFET).

13. A power supply system, which is electrically connected to an electronic equipment and a power supply terminal used for providing power to the electronic equipment, used for providing power to the electronic equipment when the power supply terminal stops providing the power, the power supply system comprising:
a battery; and
a control system, comprising:
a current regulator module electrically connected to the battery, the power supply terminal, and the electronic equipment, and comprising a switch element and a diode connected to the switch element in parallel; and
a battery management system electrically connected to the battery and
the current regulator module used for monitoring a capacity of the battery to control the current regulator module such that the power supply terminal provides a charging current through the current regulator module to charge the battery; wherein when the capacity of the battery reaches a default value, the battery management system controls the switch element of the current regulator module to be disconnected such that the power supply stops charging the battery; when the power supply terminal stops providing the power, the battery first provides power through the diode to the electronic equipment,
and then the battery management system controls the conduction of the switch element such that the battery provides the power through the switch element to the electronic equipment.

14. The power supply system as claimed in Claim 13, wherein the switch element can be a normally closed control switch.

15. The power supply system as claimed in Claim 13 or 14, wherein the battery management system further monitors a temperature of the battery and controls the current regulator module according to the stastatus of the battery to adjust the charging current provided to the battery.

16. The power supply system as claimed in Claims 13 to 15, wherein the current regulator module further comprises a micro control unit that is electrically connected to the switch element and used to control the degree of conducting and the disconnecting of the switch element; wherein when the power supply terminal stops providing the power, the battery first provides the power through the diode to the electronic equipment, and then the battery management system controls the conduction of the switch element by the micro control unit such that the battery provides the power through the switch element to the electronic equipment.

17. The power supply system as claimed in Claim 16, wherein the switch element can be a Bipolar Junction Transistor (BJT) or a Metal-Oxide Semiconductor Field-Effect Transistor (MOSFET).
